# EUROPÄISCHE PATENTSCHRIFT

(11) **EP 2 633 616 B1**
(45) Veröffentlichungstag und Bekanntmachung des Hinweises auf die Patenterteilung: **20.01.2016**
(21) Anmeldenummer: 11754673.9
(22) Anmeldetag: 09.09.2011
(51) Int. Cl.: H02P 9/10, H02J 7/14, H02P 9/48

(54) **VERFAHREN ZUR REDUZIERUNG EINER SPANNUNGSWELLIGKEIT AUFGRUND DREHUNGLEICHFÖRMIGKEIT EINES VON EINER BRENNKRAFTMASCHINE ANGETRIEBENEN GENERATORS**
METHOD FOR REDUCING A VOLTAGE RIPPLE ON THE BASIS OF ROTATIONAL IRREGULARITY OF A GENERATOR DRIVEN BY AN INTERNAL COMBUSTION ENGINE
PROCÉDÉ PERMETTANT DE RÉDUIRE UNE ONDULATION DE TENSION DUE À UNE IRRÉGULARITÉ DE ROTATION SUR UN GÉNÉRATEUR ENTRAÎNÉ PAR UN MOTEUR À COMBUSTION INTERNE

(30) Priorität: 29.10.2010 DE 102010043095
(43) Veröffentlichungstag der Anmeldung: 04.09.2013
(73) Patentinhaber: Robert Bosch GmbH, 70442 Stuttgart (DE)
(72) Erfinder: HERBIG, Ralf, 71229 Leonberg (DE); ROESNER, Julian, 74199 Untergruppenbach (DE)
(86) Internationale Anmeldenummer: PCT/EP2011/065646
(87) Internationale Veröffentlichungsnummer: WO 2012/055628

(56) Entgegenhaltungen:
- DE-A1- 4 440 830
- DE-A1- 10 361 215
- JP-A- 63 114 598
- JP-A- 2000 316 298
- JP-A- 2006 238 563
- US-A- 5 323 101

## Beschreibung

Die vorliegende Erfindung betrifft ein Verfahren zur Reduzierung einer von einer Drehungleichförmigkeit einer Brennkraftmaschine hervorgerufenen Welligkeit der Ausgangsspannung eines von der Brennkraftmaschine angetriebenen Generators.

### Stand der Technik

Als Generatoren werden in Kraftfahrzeugen üblicherweise Klauenpolgeneratoren mit elektrischer Erregung eingesetzt. Der Strom durch die Läuferwicklung dient als Stellgröße zur Regelung der gewünschten Ausgangsspannung oder eines geforderten Drehmomentes und wird von einem zugeordneten Feldregler vorgegeben. Eine derartige Regelung ist erforderlich, weil anderenfalls durch die sehr unterschiedlichen Motordrehzahlen von dem Generator stark schwankende Spannungswerte geliefert würden, die gegebenenfalls die nachgeordnete Elektrik beschädigen könnten.

Da die Läuferwicklung typischerweise eine Zeitkonstante > 150 ms aufweist, sind schnelle Regelvorgänge nicht möglich. Dies führt jedoch insbesondere bei niedrigen Drehzahlen, insbesondere im Bereich der Leerlaufdrehzahl, zu Spannungswelligkeiten, da hier die Abgabeleistung des Generators sehr stark von der Drehzahl abhängt. Schwankt die Drehzahl wegen einer Drehungleichförmigkeit in diesem Bereich sehr schnell, kann der Feldregler aufgrund der Läuferzeitkonstante des Läuferfeldes nicht schnell genug auf die Schwankungen reagieren, so dass es zu einer unerwünschten Welligkeit der Generator-Ausgangsspannung kommt. Dieser Effekt verstärkt sich noch bei Generatoren, die zusätzlich zur Läuferwicklung über Permanentmagnete zur Streuflusskompensation verfügen, da hier die Leistungskennlinie einen noch steileren Anstieg aufweist. Aus diesem Grund schlägt JP 63 114 598 vor, Kurzzeitschwankungen über die ständerseitigen Stromrichter und Langzeitschwankungen über den Feldstromregler zu reduzieren.

In der EP 0 847 485 B1 wird eine Methode zur Dämpfung von Drehmomentschwankungen aufgrund einer Drehungleichförmigkeit der Brennkraftmaschine offenbart, wobei eine Generator motorisch genutzt wird, um Drehmomentschwankungen zu kompensieren. Hierdurch wird jedoch die Spannungswelligkeit noch verstärkt.

Es ist daher wünschenswert eine Möglichkeit anzugeben, eine Welligkeit der Ausgangsspannung eines von der Brennkraftmaschine angetriebenen Generators zu reduzieren.

### Offenbarung der Erfindung

Erfindungsgemäß wird ein Verfahren zur Reduzierung einer von einer Drehungleichförmigkeit einer Brennkraftmaschine hervorgerufenen Welligkeit der Ausgangsspannung eines von der Brennkraftmaschine angetriebenen Generators mit den Merkmalen des Patentanspruchs 1 vorgeschlagen. Vorteilhafte Ausgestaltungen sind Gegenstand der Unteransprüche sowie der nachfolgenden Beschreibung.

### Vorteile der Erfindung

Die Erfindung lässt sich besonders vorteilhaft bei Generatoren einsetzen, deren Ausgangsspannung durch einen Stromrichter mit ansteuerbaren Schaltelementen gleichgerichtet wird. Ein solcher Stromrichter kann als Synchrongleichrichter, als Hochsetzsteller, als Tiefsetzsteller, als Pulswechselrichter usw. betrieben werden. Hier bietet sich eine besonders einfache Möglichkeit für eine ständerseitige Regelung durch entsprechende Ansteuerung der Schaltelemente, wodurch der Kommutierungswinkel und damit auch die Ausgangsgleichspannung beeinflusst werden.

Stromrichter mit ansteuerbaren Schaltelementen werden in Kraftfahrzeugen bei Generatoren verstärkt eingesetzt. Zum einen bieten sie Vorteile hinsichtlich des Wirkungsgrades und zum anderen ermöglichen sie auch einen Betrieb des Generators als Motor, um bspw. den Verbrennungsmotor zu starten oder beim Vortrieb zu unterstützen. Ein Generator mit entsprechendem Stromrichter ist bspw. in der DE 100 27 859 A1 offenbart.

Bei Generatoren mit Stromrichter (bspw. Startergeneratoren mit Pulswechselrichter) lässt sich die Stromhöhe ständerseitig über eine gezielte Ansteuerung der Schaltelemente bzw. Gleichrichterelemente, üblicherweise Transistoren, regeln. Da die Ständerwicklung eine wesentlich geringere Zeitkonstante aufweist als die Läuferwicklung, ist diese Art der Regelung besonders geeignet, die beschriebenen Spannungsschwankungen zu dämpfen. Regelspannungsschwankungen im elektrischen Fahrzeugbordnetz werden minimiert.

Die Erfindung basiert wesentlich auf der Maßnahme, ein sog. elektrisches Freilaufsystem einzusetzen, bei dem im generatorischen Betrieb der elektrischen Maschine im leerlaufnahen Bereich der Kommutierungswinkel so gesteuert wird, dass der Generatorstrom im Drehzahlmaximum reduziert und im Drehzahlminimum erhöht wird. Dies führt zu einer geringeren Stromwelligkeit und somit auch zu einer geringeren Spannungswelligkeit. Geeignete Eingangsgrößen für die Regelung sind Generatordrehzahl und Generatorspannung sowie die Lage des Erregerfeldes.

Die Regelung wird vorzugsweise eingesetzt, wenn die Spannungswelligkeit einen vorgebbaren Schwellwert, bspw. 100 mV, überschreitet, sich die Frequenz der Generatorwechselspannung in einem vorgebbaren Bereich, bspw. von 25 bis 200 Hz, befindet und sich die Generatordrehzahl in einem vorgebbaren Bereich, bspw. von 1.000-1.800 U/min, befindet. Die Regelung wird zweckmäßigerweise beendet, wenn die Generatordrehzahl einen vorgebbaren Schwellwert, bspw. 2.000 U/min, überschreitet. Danach wird wieder auf herkömmliche Weise läuferseitig über den Feldregler geregelt, wobei der Stromrichter dann normalerweise als Synchrongleichrichter betrieben wird. Bei Einsatz der erfindungsgemäßen Regelung wird der Kommutierungswinkel durch entsprechende Ansteuerung der Schaltelemente solange verändert, bis die Spannungswelligkeit minimal ist bzw. unter einer akzeptablen Schwelle liegt. Durch Veränderung des Kommutierungswinkels wird ein Anteil des Stroms innerhalb des Stromrichter kurzgeschlossen, so dass die Welligkeit am Ausgang abnimmt.

Eine erfindungsgemäße Recheneinheit, z.B. ein Steuergerät eines Kraftfahrzeugs, ist, insbesondere programmtechnisch, dazu eingerichtet, ein erfindungsgemäßes Verfahren durchzuführen.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung schematisch dargestellt und wird im Folgenden unter Bezugnahme auf die Zeichnung ausführlich beschrieben.

### Kurze Beschreibung der Zeichnungen

Figur 1 zeigt eine Ausführungsform eines Generators mit Stromrichter mit ansteuerbaren Schaltelementen, wie er der Erfindung zugrunde liegen kann.
Figur 2 zeigt eine Ausführungsform einer erfindungsgemäß ausgebildeten Steuereinrichtung zur Durchführung der Erfindung.
Figur 3a zeigt Strom-, Spannungs- und Drehzahlverläufe bei einer Regelung gemäß dem Stand der Technik.
Figur 3b zeigt Strom-, Spannungs- und Drehzahlverläufe bei einer Regelung gemäß einer Ausführungsform der Erfindung.

### Ausführungsform(en) der Erfindung

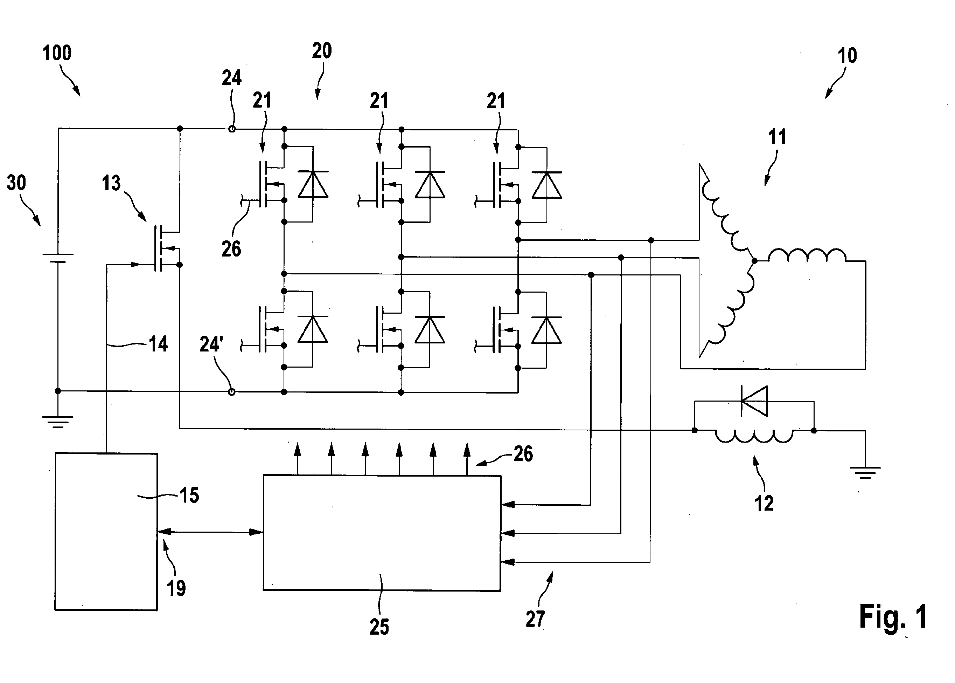

In Figur 1 ist eine elektrische Maschine, wie sie der vorliegenden Erfindung zugrunde liegen kann, schaltplanartig dargestellt und insgesamt mit 100 bezeichnet. Die elektrische Maschine weist eine Generatorkomponente 10 und eine Stromrichterkomponente 20 auf. Die Stromrichterkomponente wird im generatorischen Betrieb der Maschine üblicherweise als Gleichrichter betrieben.

Die Generatorkomponente 10 ist lediglich schematisch in Form von sternförmig verschalteten Ständerwicklungen 11 und einer zu einer Diode parallel geschalteten Erreger- bzw. Läuferwicklung 12 dargestellt. Die Läuferwicklung wird durch einen Leistungsschalter 13, der mit einem Anschluss 24 der Stromrichterkomponente 20 verbunden ist, getaktet geschaltet. Die Ansteuerung des Leistungsschalters 13 erfolgt nach Maßgabe eines Feldreglers 15, wobei der Leistungsschalter 13 ebenso wie die zur Läuferwicklung 12 parallel geschaltete Diode in der Regel in einer anwendungsspezifischen integrierten Schaltung (ASIC) des Feldreglers integriert sind.

Im Rahmen der vorliegenden Anmeldung ist ein dreiphasiger Generator dargestellt. Im Prinzip ist die vorliegende Erfindung jedoch auch bei weniger- oder mehrphasigen Generatoren, beispielsweise fünfphasigen Generatoren einsetzbar.

Die Stromrichterkomponente 20 ist hier als B6-Schaltung ausgeführt und weist Schaltelemente 21 auf, die beispielsweise als MOSFET 21 ausgeführt sein können. Die MOSFET 21 sind, beispielsweise über Stromschienen, mit den jeweiligen Ständerwicklungen 11 des Generators verbunden. Ferner sind die MOSFET mit Anschlüssen 24, 24' verbunden und stellen bei entsprechender Ansteuerung einen Gleichstrom für ein Bordnetz 30 eines Kraftfahrzeugs zur Verfügung. Die Ansteuerung der Schaltelemente 21 erfolgt über eine Ansteuereinrichtung 25 über Ansteuerkanäle 26, von denen aus Gründen der Übersicht nicht alle mit Bezugszeichen versehen sind. Die Ansteuereinrichtung 25 erhält über Phasenkanäle 27 jeweils die Phasenspannung der einzelnen Ständerwicklungen. Zur Bereitstellung dieser Phasenspannungen können weitere Einrichtungen vorgesehen sein, die jedoch der Übersichtlichkeit halber nicht dargestellt sind.

Die Ansteuereinrichtung 25 nimmt im (Synchron-)Gleichrichterbetrieb eine Auswertung der über die Phasenkanäle 27 bereitgestellten Phasenspannungen vor und bestimmt hieraus einen jeweiligen Ein- und Ausschaltzeitpunkt eines einzelnen MOSFET 21. Die Steuerung über Ansteuerkanäle 26 wirkt sich auf die Gate-Anschlüsse der MOSFET 21 aus.

Bekannte Feldregler, wie der im Rahmen dieser Ausführungsform vorgesehene Feldregler 15, weisen einen sogenannten Klemme-V-Anschluss 19 auf, der mit einer Phase der Ständerwicklung des Generators verbunden ist. Die Frequenz des Klemme-V-Signals bzw. des Phaseneingangssignals wird im Regler 15 ausgewertet und dient in Abhängigkeit von den Kenngrößen dieses Signals zur Aktivierung oder Deaktivierung des Reglerbetriebs und letztlich zur Ansteuerung des Leistungsschalters 13 über eine Ansteuerleitung 14. Das Phasensignal für den Phasensignaleingang 19 kann, wie dargestellt, auch durch die Ansteuereinrichtung 25 geführt werden.

Bei Motorstart beginnt sich der Generatorrotor mit der Feldwicklung 12 zu drehen und es wird in eine Spannung in den Ständerwicklungen 11 induziert. Diese Phasenspannungen werden, beispielsweise frequenzmäßig, von der Ansteuereinrichtung 25 erfasst und zur Ableitung bzw. Bestimmung der Ansteuersignale für die einzelnen MOSFET 21 verwendet.

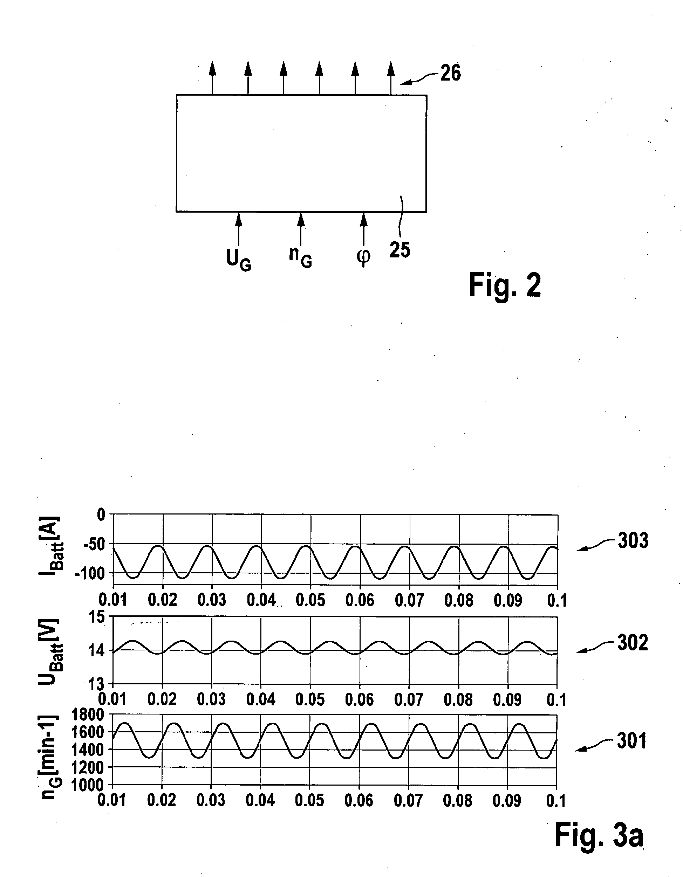

Eine besonders bevorzugte Ausführungsform der Erfindung wird nun unter Bezugnahme auf Figuren 1 und 2 näher beschrieben, wobei in Figur 2 eine Ansteuereinrichtung 25 gezeigt ist, die dazu eingerichtet ist, eine besonders bevorzugte Ausführungsform der Erfindung durchzuführen. Der Ansteuereinrichtung 25 gehen als Eingangssignale ein zeitlicher Verlauf der Generatorspannung U_{G}, die momentane Drehzahl n_{G} der Generatorkomponente 10 sowie der Lagewinkel ϕ der Generatorkomponente zu. Der Lagesensor bestimmt dabei die Phasenlage des Erregerfeldes. Würde die elektrische Maschine generatorisch mit Dioden betrieben, kommutierten diese zum natürlichen Kommutierungszeitpunkt (Nulldurchgang des Diodenstroms). Bei Einsatz von Schaltelementen, bspw. Leistungshalbleitern, kann jedoch dieser Kommutierungszeitpunkt verschoben werden, d.h. die Leistungshalbleiter bleiben länger oder kürzer durchgeschaltet.

Auf Grundlage der Erfindung bestimmt nun die Ansteuereinrichtung 25 entsprechende Ansteuersignale, um die Schaltelemente 21 zur Reduzierung einer Ausgangsspannungswelligkeit anzusteuern. Dazu wird der Kommutierungswinkel (und damit die Phasenlage zwischen der Polradspannung und der Ständerspannung) so verändert, dass der Generatorstrom im Drehzahlmaximum reduziert und im Drehzahlminimum erhöht wird.

Gemäß einer bevorzugten Ausführungsform der Erfindung wird bei kleinen Drehzahlen der Kommutierungswinkel durch entsprechende Ansteuerung der Schaltelemente 21 solange verändert, bis die Spannungswelligkeit minimal ist bzw. unter einer akzeptablen Schwelle liegt.

Die ständerseitige Regelung der Generatorspannung wird bevorzugterweise nur in einem geringen Drehzahlbereich um die Leerlaufdrehzahl, beispielsweise von 1.000 bis 1.800 U/min, durchgeführt. Überschreitet die Generatordrehzahl n_{G} einen vorgebbaren Schwellwert, beispielsweise 2.000 U/min, so wird die Generatorspannung wieder auf herkömmliche Weise über den Feldregler 15 durch Vorgabe des Stroms durch die Läuferwicklung 12 geregelt.

In Figur 3a sind Strom-, Spannungs- und Drehzahlverläufe über der Zeit gezeigt, wie sie sich bei einer Ansteuerung gemäß dem Stand der Technik einer elektrischen Maschine 100 gemäß Figur 1 ergeben. Dabei ist der zeitliche Verlauf der Generatordrehzahl n_{G} in einem Diagramm 301, der zeitliche Verlauf der gleichgerichteten Ausgangsspannung U_{Batt}, wie sie sich an den Anschlüssen 24 und 24' ergibt, in einem Diagramm 302 und der zeitliche Verlauf des zugehörigen Ausgangsstroms I_{Batt} in einem Diagramm 303 dargestellt. Es ist ersichtlich, dass aufgrund der Drehungleichförmigkeit eine deutliche Welligkeit sowohl der Ausgangsspannung U_{Batt} als auch des Ausgangsstroms I_{Batt} ergibt.

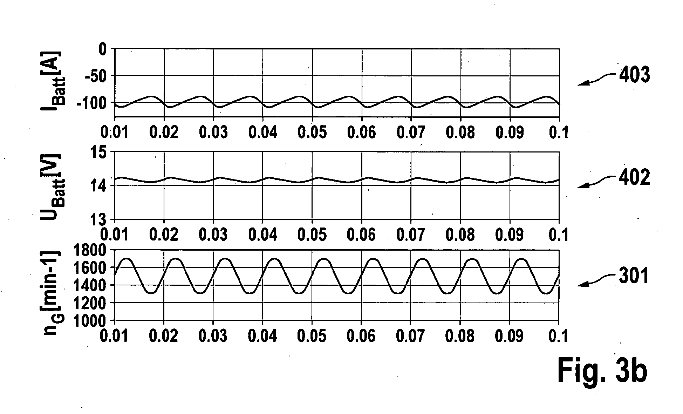

Im Vergleich dazu ist in Figur 3b der zeitliche Verlauf der Ausgangsspannung U_{Batt} sowie des Ausgangsstroms I_{Batt} dargestellt, die sich bei einer erfindungsgemäßen Ansteuerung der elektrischen Maschine 100 gemäß Figur 1 ergeben. Der zeitliche Verlauf des Ausgangsstroms I_{Batt} ist in einem Diagramm 403 und der zeitliche Verlauf der Ausgangsspannung U_{Batt} in einem Diagramm 402 dargestellt. Der zeitliche Verlauf der Generatordrehzahl n_{G} gemäß Figur 3b entspricht dem zeitlichen Verlauf 301 gemäß Figur 3a. Es ist ersichtlich, dass aufgrund der bevorzugten Ansteuerung der Schaltelemente eine deutliche Reduzierung der Welligkeit sowohl der Ausgangsspannung U_{Batt} als auch des Ausgangsstroms I_{Batt} erzielbar ist.

## Patentansprüche

1. Verfahren zur Reduzierung einer von einer Drehungleichförmigkeit einer Brennkraftmaschine hervorgerufenen Welligkeit der Ausgangsspannung (U_{Batt}) eines von der Brennkraftmaschine angetriebenen Generators (10), der eine Ständerwicklung (11), eine Läuferwicklung (12), einen der Läuferwicklung (12) zugeordneten Feldregler (15) zur läuferseitigen Regelung der Ausgangsspannung des Generators (10) und einen nachgeschalteten Stromrichter (20) mit ansteuerbaren Schaltelementen (21) aufweist, wobei der Stromrichter (20) als Gleichrichter betrieben wird, wobei zur Reduktion der Spannungswelligkeit eine ständerseitige Regelung der Ausgangsspannung (U_{Batt}) des Generators über eine entsprechende einen Kommutierungswinkel verändernde Ansteuerung der Schaltelemente (21) des Stromrichters (20) derart erfolgt, dass der Generatorstrom in einem Drehzahlmaximum des Generators reduziert und in einem Drehzahlminimum des Generators erhöht wird.

2. Verfahren nach Anspruch 1, wobei die ständerseitige Regelung der Ausgangsspannung (U_{Batt}) des Generators (10) bei Generatordrehzahlen (n_{G}) unterhalb eines ersten Schwellwerts erfolgt.

3. Verfahren nach Anspruch 2, wobei der erste Schwellwert in Abhängigkeit von der Leerlaufdrehzahl der Brennkraftmaschine vorgegeben wird.

4. Verfahren nach Anspruch 2 oder 3, wobei die läuferseitige Regelung der Ausgangsspannung des Generators (10) über eine Einstellung des Stroms durch die Läuferwicklung (12) bei Generatordrehzahlen (n_{G}) oberhalb eines zweiten Schwellwerts erfolgt.

5. Verfahren nach Anspruch 4, wobei der zweite Schwellwert in Abhängigkeit vom ersten Schwellwert vorgegeben wird.

6. Verfahren nach einem der vorstehenden Ansprüche, wobei die Regelung nur durchgeführt wird, wenn die Welligkeit der Ausgangsspannung (U_{Batt}) einen vorgebbaren dritten Schwellwert übersteigt.

7. Energieversorgungseinheit (100), insbesondere für ein Kraftfahrzeug, aufweisend einen Generator (10) mit einer Ständerwicklung (11), einer Läuferwicklung (12) und einem der Läuferwicklung (12) zugeordneten Feldregler (15) zur läuferseitigen Regelung der Ausgangsspannung des Generators sowie einen nachgeschalteten als Gleichrichter betriebenen Stromrichter (20) mit ansteuerbaren Schaltelementen (21), **gekennzeichnet durch** Mittel (25) zur ständerseitigen Regelung der Ausgangsspannung des Generators, die dazu eingerichtet sind, die Ausgangsspannung **durch** entsprechende einen Kommutierungswinkel verändernde Ansteuerung der Schaltelemente (21) des Stromrichters (20) derart zu regeln, dass der Generatorstrom in einem Drehzahlmaximum des Generators reduziert und in einem Drehzahlminimum des Generators erhöht wird.

8. Energieversorgungseinheit (100) nach Anspruch 7, wobei die Mittel (25) zur Regelung der Ausgangsspannung als Recheneinheit ausgebildet sind, die dazu eingerichtet ist, ein Verfahren nach einem der Ansprüche 1 bis 6 durchzuführen.

## Claims

1. Method for reducing ripple, which is caused by a rotational non-uniformity of an internal combustion engine, in the output voltage (U_{Batt}) from a generator (10) which is driven by the internal combustion engine, the said generator having a stator winding (11), a rotor winding (12), a field controller (15), which is associated with the rotor winding (12), for rotor-end control of the output voltage from the generator (10), and a downstream current converter (20) with switching elements (21) which can be driven, wherein the current converter (20) is operated as a rectifier, wherein, in order to reduce the voltage ripple, stator-end control of the output voltage (U_{Batt}) from the generator is performed by means of corresponding driving, which changes a commutation angle, of the switching elements (21) of the current converter (20) in such a way that the generator current is reduced at a maximum rotation speed of the generator and is increased at a minimum rotation speed of the generator.

2. Method according to Claim 1, wherein stator-end control of the output voltage (U_{Batt}) from the generator (10) is performed at generator rotation speeds (n_{G}) below a first threshold value.

3. Method according to Claim 2, wherein the first threshold value is prespecified depending on the idling rotation speed of the internal combustion engine.

4. Method according to Claim 2 or 3, wherein rotor-end control of the output voltage from the generator (10) is performed by means of adjusting the current through the rotor winding (12) at generator rotation speeds (n_{G}) above a second threshold value.

5. Method according to Claim 4, wherein the second threshold value is prespecified depending on the first threshold value.

6. Method according to one of the preceding claims, wherein control is carried out only when the ripple of the output voltage (U_{Batt}) exceeds a prespecifiable third threshold value.

7. Power supply unit (100), in particular for a motor vehicle, having a generator (10) with a stator winding (11), a rotor winding (12) and a field controller (15), which is associated with the rotor winding (12), for rotor-end control of the output voltage from the generator, and also having a downstream current converter (20) which is operated as a rectifier and has switching elements (21) which can be driven, **characterized by** means (25) for stator-end control of the output voltage from the generator, which means are designed to control the output voltage by corresponding driving, which changes a commutation angle, of the switching elements (21) of the current converter (20) in such a way that the generator current is reduced at a maximum rotation speed of the generator and is increased at a minimum rotation speed of the generator.

8. Power supply unit (100) according to Claim 7, wherein the means (25) for controlling the output voltage are formed as a computer unit which is designed to carry out a method according to one of Claims 1 to 6.

## Revendications

1. Procédé permettant de réduire une ondulation de tension de sortie (U_{Batt}), due à une irrégularité de rotation d'un moteur à combustion interne, d'un générateur (10) entraîné par le moteur à combustion interne, qui présente un enroulement de stator (11), un enroulement de rotor (12), un régulateur de champ (15) associé à l'enroulement de rotor (12) pour la régulation côté rotor de la tension de sortie du générateur (10) et un convertisseur (20) monté en aval avec des éléments de commutation commandables (21), le convertisseur (20) fonctionnant en tant que redresseur, une régulation côté stator de la tension de sortie (U_{Batt}) du générateur ayant lieu pour réduire l'ondulation de tension par le biais d'une commande correspondante des éléments de commutation (21) du convertisseur (20) modifiant un angle de commutation de telle sorte que le courant du générateur soit réduit dans le cas d'une vitesse de rotation maximale du générateur et soit augmenté dans le cas d'une vitesse de rotation minimale du générateur.

2. Procédé selon la revendication 1, dans lequel la régulation côté stator de la tension de sortie (U_{Batt}) du générateur (10) a lieu dans le cas de vitesses de rotation du générateur (n_{G}) en dessous d'une première valeur de seuil.

3. Procédé selon la revendication 2, dans lequel la première valeur de seuil est prédéfinie en fonction du régime de marche à vide du moteur à combustion interne.

4. Procédé selon la revendication 2 ou 3, dans lequel la régulation côté rotor de la tension de sortie du générateur (10) s'effectue par le biais d'un réglage du courant traversant l'enroulement de rotor (12) à des vitesses de rotation du générateur (n_{G}) au-dessus d'une deuxième valeur de seuil.

5. Procédé selon la revendication 4, dans lequel la deuxième valeur de seuil est prédéfinie en fonction de la première valeur de seuil.

6. Procédé selon l'une quelconque des revendications précédentes, dans lequel la régulation n'est effectuée que lorsque l'ondulation de la tension de sortie (U_{Batt}) dépasse une troisième valeur de seuil prédéfinissable.

7. Unité d'alimentation en énergie (100), en particulier pour un véhicule automobile, présentant un générateur (10) avec un enroulement de stator (11), un enroulement de rotor (12) et un régulateur de champ (15) associé à l'enroulement de rotor (12) pour la régulation côté rotor de la tension de sortie du générateur ainsi qu'un convertisseur (20) monté en aval avec des éléments de commutation commandables (21), fonctionnant en tant que redresseur, **caractérisée par** des moyens (25) pour la régulation côté stator de la tension de sortie du générateur, qui sont prévus pour réguler la tension de sortie par une commande correspondante des éléments de commutation (21) du convertisseur (20), modifiant un angle de commutation, de telle sorte que le courant du générateur soit réduit dans le cas d'une vitesse de rotation maximale du générateur et soit augmenté dans le cas d'une vitesse de rotation minimale du générateur.

8. Unité d'alimentation en énergie (100) selon la revendication 7, dans laquelle les moyens (25) pour réguler la tension de sortie sont réalisés sous forme d'ordinateur, qui est prévu pour mettre en oeuvre un procédé selon l'une quelconque des revendications 1 à 6.
